# FASCICULE DE BREVET EUROPEEN

(11) **EP 3 307 420 B1**
(45) Date de publication et mention de la délivrance du brevet: **04.10.2023**
(21) Numéro de dépôt: 16736524.6
(22) Date de dépôt: 15.06.2016
(51) Int. Cl.: B01D 53/26, B01D 53/28

(54) **COMPOSITION ABSORBANTE D'HUMIDITÉ COMPRENANT UN AGENT SÉQUESTRANT**
FEUCHTIGKEITSABSORBIERENDE ZUSAMMENSETZUNG MIT EINEM SEQUESTRIERMITTEL
MOISTURE-ABSORBING COMPOSITION COMPRISING A SEQUESTERING AGENT

(30) Priorité: 15.06.2015 FR 1555446
(43) Date de publication de la demande: 18.04.2018
(73) Titulaire: EUROTAB OPERATIONS, 42170 Saint-Just-Saint-Rambert (FR)
(72) Inventeur: VENET, Valérie, 69530 Orlienas (FR); ESPEIT, Jean-Louis, 42100 Saint Etienne (FR); MARECHET, Martine, 42170 Saint Just Saint Rambert (FR)
(74) Mandataire: Regimbeau
(86) Numéro de dépôt international: PCT/FR2016/051451
(87) Numéro de publication internationale: WO 2016/203152

(56) Documents cités:
- EP-A1- 0 685 257
- EP-A1- 0 685 257
- EP-A2- 0 832 686
- WO-A1-03/063918
- CN-A- 101 671 541
- DE-A1- 10 164 632
- FR-A1- 2 583 990
- FR-A1- 2 583 990
- FR-A1- 2 791 581
- FR-A1- 2 791 581
- FR-A1- 2 879 109
- JP-A- H01 281 130
- JP-A- H01 281 130
- JP-A- S59 160 518
- JP-A- S59 160 518
- US-A- 5 907 908
- US-A- 5 907 908
- US-A1- 2003 024 997
- US-A1- 2006 180 025
- US-A1- 2009 275 470
- US-A1- 2009 275 470
- US-A1- 2014 224 121
- US-A1- 2014 224 121
- US-B1- 6 767 521
- US-B1- 6 767 521
- US-B1- 6 767 521

## Description

### DOMAINE DE L'INVENTION

La présente invention a pour objet une composition absorbante d'humidité, notamment destinée à assainir l'air, et un dispositif absorbant d'humidité comprenant ladite composition.

La présente invention a également pour objet l'utilisation d'au moins un agent séquestrant dans une composition absorbante d'humidité, afin d'éviter toute fuite de saumure résultant de l'absorption de l'humidité de l'air par la composition absorbante.

### ETAT DE LA TECHNIQUE

L'assainissement d'un habitable, tel que les pièces d'une maison, une caravane, un bateau, une caisse de transport, un placard ou une armoire à linge, devient de plus en plus important dans la mesure où les consommateurs recherchent de plus en plus une sensation de bien-être avec les produits qu'ils utilisent quotidiennement. L'aspect pratique et facile d'utilisation est une des qualités principales que doivent remplir ces produits.

Des compositions absorbantes d'humidité sont déjà connues dans l'art antérieur.

Le brevet EP1426105 concerne un matériau absorbeur d'humidité destiné à être utilisé dans un dispositif absorbeur d'humidité, ce matériau comprenant un agent hygroscopique apte à absorber l'humidité de l'air et à la transformer en saumure, caractérisé en ce qu'il se présente sous la forme d'un bloc compacte comprenant au moins deux couches. L'agent hygroscopique utilisé contient au moins 50% d'un sel de CaCl₂ ou d'un sel de MgCl₂ ou un mélange d'un sel de CaCl₂ et de MgCl₂.

La demande internationale WO2012/066150 décrit un équipement composé d'un dispositif de maintien pour maintenir une tablette cylindrique contenant un agent desséchant, de préférence le chlorure de calcium apte à absorber l'humidité de l'air et à la transformer en saumure et un récipient de collecte disposé en dessous du dispositif de maintien de la tablette. La tablette a une forme cylindrique annulaire et présente une surface spécifique qui permet d'augmenter la surface de contact avec l'air et donc d'améliorer l'efficacité d'absorption d'humidité. L'équipement contient un système de ventilation qui permet une meilleure circulation de l'air et donc d'améliorer l'efficacité d'absorption.

Les agents desséchant présents dans les compositions sous la forme de sels hygroscopique, notamment de CaCl₂, capturent l'humidité de l'air et la restitue en eau fortement chargée en ion Ca²⁺ et Cl⁻, appelée saumure. Les compositions absorbantes d'humidité se présentent généralement sous forme de granulés, poudre ou tablette solide qui, au fur et à mesure de l'absorption de l'humidité de l'air, se transforme en une saumure liquide. Il existe donc un important risque de fuite de la saumure ainsi formée. En outre, l'élimination de l'importante quantité du liquide ainsi formé implique le transport malaisé d'un bac ou d'une poche, avec un risque important de renversement de la saumure.

Il existe donc un besoin important d'une composition absorbante d'humidité qui évite la formation de la saumure liquide ou qui permet de la piéger afin d'éviter toute fuite ou renversement.

La demande internationale WO03/063918 décrit une méthode pour absorber l'humidité et les mauvaises odeurs présentes dans les espaces confinés tels que les tiroirs des armoires, les chaussures. Le produit se présente sous la forme d'un sachet perméable à l'humidité contenant un composé de déshumidification sous forme particulaire, un agent neutralisateur d'odeur sous forme particulaire et une charge choisie parmi les amidons, les dérivés d'amidon, les celluloses, des dérivés de cellulose qui agit comme un agent épaississant ou gélifiant de l'eau présente à l'intérieur su sachet. Le produit proposé se présente sous la forme d'un sachet. Ce produit est destiné uniquement aux espaces confinés à cause de la faible efficacité d'absorption d'humidité du produit. Ce dernier ne pourrait pas être utilisé pour déshumidifier les pièces d'une habitation.

Le brevet FR2879109 décrit une composition absorbante d'humidité, caractérisée en ce qu'elle contient, en poids par rapport au poids total de la composition:
- 70 à 95% d'une substance hygroscopique
- 3 à 20% d'un agent épaississant de type polysaccharide
- 2 à 10% d'un agent super-absorbant de l'eau

La composition absorbante d'humidité décrite permet de gélifier la saumure. La composition de l'invention peut être conditionnée dans des barquettes pour absorber les liquides qui sont exsudés par les produits alimentaires, les pansements, etc.. la composition peut également être conditionnée dans des sachets pour être introduits dans des chaussures afin d'absorber la transpiration. L'invention ne concerne pas des tablettes. Ce produit est destiné uniquement aux espaces confinés à cause de la faible efficacité d'absorption d'humidité du produit. Ce produit ne pourrait pas être utilisé pour déshumidifier les pièces d'une habitation.

La demande internationale WO2006/052748 décrit un dispositif comprenant une composition humectant sous forme solide permettant de contrôler l'humidité relative dans un environnement donné. La composition peut être mise sous forme de tablette, être conditionnée dans un sachet ou dans un emballage perméable à l'humidité. Le sachet peut également être micro-perforé. La composition humectant est composée d'un sel humectant, d'eau et d'une charge pouvant être une cellulose, argile, silica gel, carbohydrate, polymère hydrophile, agent gélifiant à base de protéine, gomme, hydrocolloide permettant de stabiliser et solidifier les sels humectants présents dans l'invention sous forme d'une solution saturée afin d'éviter tout risque de fuite ou de déversement de la solution. La composition peut également contenir des agents anti-microbien, du charbon actif, des produits organiques volatiles.

La demande de brevet EP2471595 décrit une composition absorbante d'humidité comprenant un "carbohydrate nanosponge" et un agent hygroscopique tel que le chlorure de calcium. Par carbohydrate nanosponge on entend un polymère poreux fortement ramifié obtenu par polymérisation d'un carbohydrate sélectionné parmi les dextrines, les celluloses, les amidons et les agents de liaisons qui conviennent. Le produit peut se présenter sous la forme d'une poudre, de granulés, micro et nano particules, d'une tablette, d'un gel, d'une pâte ou d'un colloïde. Le produit permet d'éviter les risques de fuite ou de déversement de la saumure et de limiter la corrosion des éléments/des biens à proximité du produit absorbant d'humidité.

La demande de brevet FR2970325 décrit un kit de déshumidification de l'air comprenant un dispositif de déshumidification de l'air et une composition absorbante de l'humidité de l'air comprenant au moins une fraction monolithique solide de dimensions prédéterminées. Le dispositif comprenant un support de la composition absorbante comprenant une pluralité de logements. Chaque logement est agencé de façon à recevoir une seule fraction monolithique solide de la composition absorbante. Par fraction monolithique solide, on entend une fraction qui n'est ni liquide, ni gazeuse, ni pulvérulente. Cette fraction peut être un gel ou un solide indéformable, de préférence la composition est sous forme de fractions monolithiques solides. La composition du produit comprend 70-90% en poids d'un sel hygroscopique et 10-30% en poids d'un super-absorbant. Le kit permet d'utiliser plusieurs fractions monolithiques solides de la composition absorbante. La surface de contact entre l'air et l'ensemble des fractions est donc augmentée par rapport à un bloc monolithique unique. Ces fractions monolithiques sont plus faciles à manipuler que les produits pulvérulents. De plus l'invention proposée permet d'adapter le dispositif en fonction de l'hygrométrie souhaitée par l'utilisateur.

### RESUME DE L'INVENTION

La présente invention a pour objet une composition absorbante d'humidité permettant de proposer une solution aux différents inconvénients rencontrés dans l'art antérieur. Notamment, la présente invention permet d'absorber efficacement l'humidité des pièces des habitations et habitacles, tout en évitant tout risque de renversement ou de fuite de la saumure résultant de l'absorption de l'humidité de l'air par la composition absorbante. La présente invention permet également d'obtenir une composition absorbante d'humidité pouvant être facilement évacuée dans le réseau classique des déchets ménagers solides sans risque de fuite. La présente invention permet d'éviter toute formation de saumure liquide, la saumure est instantanément absorbée au cours du temps.

Un objet de la présente invention concerne ainsi une composition absorbante d'humidité comprenant :
- 50 à 90 % en poids d'au moins un agent desséchant choisi parmi le sel de CaCl₂, le sel de MgCl₂ et leurs mélanges,
- 5 à 30% en poids d'au moins un agent séquestrant choisi parmi les polymères de polycarboxylate tels que les polyacrylates, les copolymères acrylique/maléique, les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges, et
- 3 à 30 % en poids d'au moins un agent super-absorbant capable d'absorber la saumure formée par ledit agent desséchant après absorption de l'humidité.

Un second objet de la présente invention porte sur un dispositif absorbant d'humidité comprenant la composition absorbante d'humidité selon l'invention.

Un troisième objet de la présente invention porte sur l'utilisation d'un tel dispositif absorbant d'humidité pour la déshumidification d'une pièce.

La présente invention a également pour objet l'utilisation d'au moins un agent séquestrant choisi parmi les polymères de polycarboxylate tels que les polyacrylates, les copolymères acrylique/maléique, les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges, dans une composition absorbante d'humidité comprenant au moins un agent desséchant choisi parmi le sel de CaCl₂, le sel de MgCl₂ et leurs mélanges, afin d'éviter toute fuite de la saumure résultant de l'absorption de l'humidité de l'air par la composition absorbante.

### DESCRIPTION DETAILLEE DE L'INVENTION

Les inventeurs ont découvert de manière surprenante que l'ajout d'au moins un agent séquestrant dans une composition absorbante d'humidité comprenant un agent desséchant permet d'absorber efficacement la saumure liquide au fur et à mesure de sa formation. La saumure formée est instantanément absorbée, ce qui évite tout risque de renversement ou de fuite et permet une évacuation facile de la composition absorbante dans le réseau classique des déchets ménagers solides.

Ainsi, la présente invention a principalement pour objet une composition absorbante d'humidité telle que décrite ci-avant.

Par « agent desséchant », on entend, au sens de la présente invention, une substance hygroscopique apte à absorber l'humidité de l'air et à la transformer en saumure.

L'agent desséchant est choisi parmi le sel de CaCl₂, le sel de MgCl₂, et leurs mélanges, de manière préférée l'agent desséchant est le sel de CaCl₂.

La quantité d'agent desséchant présent dans la composition selon l'invention, permettant d'absorber l'humidité de l'air et de la transformer en saumure, est de 50 à 90 % en poids, par rapport au poids total de la composition.

Par « agent séquestrant », on entend, au sens de la présente invention, un composé qui forme des ensembles chimiques avec des ions métalliques. Plus particulièrement, un séquestrant est un composé permettant de séquestrer des ions métallique, notamment des ions calcium ou chlorure, d'une solution aqueuse.

Dans le cadre de la présente invention, l'agent séquestrant est choisi parmi les zéolithes, les phyllosilicates, les carbonates de métal alcalin, les silicates de sodium, les polymères de polycarboxylate tels que les polyacrylates, les copolymères acrylique/maléique, les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, les polyphosphates de métal alcalin tel que le tripolyphosphate de sodium, et leurs mélanges, l'agent séquestrant est en particulier choisi parmi les polymères de polycarboxylate tels que les polyacrylates, les copolymères acrylique/maléique, les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges. L'agent séquestrant est plus particulièrement choisi parmi le tripolyphosphate de sodium, le citrate de sodium, l'acide éthylène-diamine-tétraacétique (EDTA), l'acide méthylglycine-diacétique (MGDA), et leurs mélanges. L'agent séquestrant est de préférence choisi parmi le citrate de sodium, l'acide éthylène-diamine-tétraacétique (EDTA), l'acide méthylglycine-diacétique (MGDA), et leurs mélanges.

La quantité minimum d'efficacité de l'au moins un agent séquestrant peut être déterminée par l'homme du métier, à l'aide de ses connaissances générales, en fonction de la nature de l'agent séquestrant utilisé. On entend par « quantité minimum d'efficacité », la quantité minimum nécessaire pour que la saumure liquide formée au cours du temps soit absorbée instantanément. La composition absorbante d'humidité selon la présente invention comprend 5 à 30 % d'au moins un agent séquestrant, en poids par rapport au poids total de la composition.

La composition comprend en outre un agent super-absorbant.

Les agents super-absorbants synthétiques ou naturels ont la capacité d'absorber une quantité importante d'eau. C'est pourquoi, il existe dans l'art antérieur des compositions absorbantes d'humidité comprenant un agent super-absorbant permettant d'absorber la saumure au cours de sa formation.

Les inventeurs ont alors découvert de manière surprenante que l'ajout d'agent séquestrant permet d'améliorer la capacité d'absorption des super-absorbants. De manière encore plus surprenante, les inventeurs ont découvert que le mélange d'au moins un agent super-absorbant et d'au moins un agent séquestrant dans une composition absorbante d'humidité comprenant un agent desséchant, permet d'augmenter la quantité en agent desséchant.

En effet, il a été constaté qu'en utilisant la combinaison agent séquestrant/agent super-absorbant, il était possible d'obtenir des compositions absorbant encore plus efficacement la saumure liquide. Dans ce cas, le ratio massique de l'agent desséchant par rapport au mélange agent desséchant/agent séquestrant/agent super-absorbant peut être supérieur au ratio massique maximal (agent desséchant) : (agent desséchant + l'un ou l'autre de l'agent séquestrant ou agent super-absorbant) permettant une absorption efficace de la saumure liquide formée au cours du temps. La quantité minimale d'efficacité du mélange agent séquestrant/agent super-absorbant est alors inférieure à la quantité minimale d'efficacité de l'agent super-absorbant seul ou de l'agent séquestrant seul. Un tel effet permet, pour une tablette de même poids, de diminuer la quantité d'agent séquestrant et d'agent super-absorbant et ainsi d'augmenter la quantité d'agent desséchant dans la composition absorbante d'humidité selon l'invention afin d'améliorer sa capacité d'absorption de l'humidité. Ceci a été démontré dans les exemples, notamment dans l'exemple 2 dans lequel il a été obtenu une tablette absorbante d'humidité permettant d'absorber la saumure instantanément au cours du temps, comprenant 21,4% en poids par rapport au poids total de la tablette, d'un mélange agent séquestrant et agent super-absorbant (test 5), au lieu de 35.3% en poids par rapport au poids total de la tablette, d'agent super-absorbant seul (test 3) ou de 31.2 % en poids par rapport au poids total de la tablette, d'agent séquestrant seul (test 2).

Sans vouloir se lier à une quelconque théorie, les inventeurs sont d'avis que cette synergie observée peut s'expliquer par le fait que la capacité d'absorption des super-absorbants est fortement diminuée par la teneur en ions Ca²⁺ et Cl⁻ particulièrement élevée de la saumure. L'ajout d'agents séquestrant permet alors de piéger les ions Ca²⁺ et Cl⁻, et ainsi d'améliorer la capacité d'absorption des super-absorbants.

La quantité minimum d'efficacité du mélange agent séquestrant/agent super-absorbant peut être déterminée par l'homme du métier, à l'aide de ses connaissances générales, en fonction de la nature de l'agent séquestrant et de l'agent super-absorbant utilisés. De manière générale, la quantité minimum d'efficacité du mélange agent séquestrant/agent super-absorbant est d'au moins 2%, avantageusement 10 %, plus avantageusement d'au moins 20%, encore plus avantageusement d'au moins 30% inférieure à la quantité minimum d'efficacité de l'agent séquestrant seul ou de l'agent super-absorbant seul.

La composition absorbante d'humidité selon la présente invention comprend de 3 à 30 % d'au moins un agent super-absorbant, en poids par rapport au poids total de la composition.

Plus particulièrement, lorsqu'au moins un agent super-absorbant est ajouté à la composition selon l'invention, la quantité du mélange de l'au moins un agent séquestrant et de l'au moins un agent super-absorbant dans la composition est comprise t entre 8 et 60 %, plus avantageusement entre 8 et 40 %, en poids par rapport au poids total de la composition.

Par « agent super-absorbant », on entend, au sens de la présente invention, un polymère susceptible d'absorber des solutions aqueuses, telle que la saumure. Parmi les super-absorbants synthétiques qui peuvent être utilisés on peut citer les super-absorbants comportant un monomère choisi parmi l'acrylamide et ses dérivés, seul ou en mélanges, les polyacrylamides et tout autre super-absorbant synthétique permettant d'absorber les solutions aqueuses. On peut citer plus particulièrement l'Aquasorb 3005KM^{®} commercialisé par la société SNF qui est un copolymère réticulé d'acrylamide et d'acrylate de potassium. Parmi les super-absorbants naturels qui peuvent être utilisés, on peut citer les celluloses, les dérivés de celluloses, les amidons, les dérivés d'amidon, la pectine, la gélatine, les gommes telles que la gomme guar, l'agar agar, les alginates et tout autre agent permettant d'absorber des solutions notamment les solutions aqueuses. On peut citer plus particulièrement le dérivé d'amidon commercialisé par la société JRS sous le nom Vivastar CS 302 SV^{®} qui est un carboxyméthylamidon sodique.

Dans le cadre de la présente invention, l'agent super-absorbant est en particulier choisi parmi les celluloses, les dérivés de celluloses, les amidons, les dérivés d'amidon, la pectine, la gélatine, les gommes telles que la gomme guar, l'agar agar, les alginates, les polyacrylates de sodium, les copolymères polyacrylate/polyacrylamide, les copolymères polyacrylamides, les copolymère poly(éthylène-maléique anhydre), les copolymères alcool polyvinylique, l'oxyde de polyéthylène réticulé, le (méth)acrylamides, les N-alkyl(méth)acrylamides, les N,N-dialkyl(méth)acrylamides, les N-hydroxyalkyl(méth)acrylamides, les N-hydroxyéthyl(méth)acrylamides, les N,N-dihydroxyalkyl(méth)acrylamides et les lactames de vinyle. De préférence, l'agent super-absorbant est en particulier choisi parmi les celluloses, les dérivés de celluloses, les amidons, les dérivés d'amidon et les copolymères polyacrylate/polyacrylamide.

La composition absorbante d'humidité selon l'invention peut également contenir des additifs supplémentaires tels que des colorants, des anti-allergiques, des charges minérales de type silice, du carbonate de calcium, des lubrifiants tel que le stéarate de calcium, le stéarate de magnésium ou leur mélange.

La composition absorbante d'humidité selon l'invention peut également comprendre une substance active volatile ou un gel comprenant une substance active volatile. Ladite substance active volatile étant notamment choisie parmi les substances parfumantes, désodorisantes, bactéricides, insecticides, répulsives d'animaux ou d'insectes, les huiles essentielles et leurs mélanges.

Dans le cadre de la présente invention, la composition absorbante d'humidité peut se présenter sous la forme de granulés, de poudre ou d'une tablette solide. De préférence, la composition absorbante d'humidité se présente sous forme d'une tablette solide.

Par « tablette solide », on entend, au sens de la présente invention, une composition compactée constituée d'un ensemble de particules groupées de manière compacte de façon à pouvoir être manipulée sans se désagréger.

La tablette absorbante d'humidité selon l'invention peut être constituée d'une couche ou d'un empilement de plusieurs couches qui sont superposées les unes sur les autres, formant ainsi un bloc uniforme et compact. Les couches peuvent être de compositions semblables ou différentes, voire de couleurs semblables ou différentes.

La tablette peut avoir une forme cylindrique avec une section ayant une forme quelconque telle qu'une forme circulaire, ovale, octogonale, ou parallélépipédique. Lorsque la section de la composition compactée est parallélépipédique, typiquement carrée ou rectangulaire, les coins de la composition compactée peuvent être courbes de manière à ce qu'ils soient moins cassants. Chaque couche a la même section de sorte que l'empilement qu'elles forment ensemble soit uniforme. La composition compactée peut également avoir toute autre forme géométrique (étoile, losange...).

Ladite tablette peut également comporter un témoin d'usure qui sera libéré lorsque la taille de la tablette aura suffisamment diminuée.

La tablette détergente a une masse comprise entre 1 et 5000 grammes, avantageusement comprise entre 1 et 500 grammes et notamment comprise entre 100 et 500 grammes.

La tablette présente une résistance mécanique comprise entre 50 et 5000 Newtons, avantageusement entre 50 et 3000 Newtons, de manière davantage préféré entre 50 et 1500 Newtons.

La composition absorbante d'humidité selon l'invention, compactée sous forme de tablette, peut en particulier être fabriquée selon le procédé de préparation suivant :
a) mélanger les différents composants, dont l'au moins un agent desséchant, l'au moins un agent séquestrant et l'au moins un agent super-absorbant, pour former les compositions correspondant à chacune des couches ;
b) Pré-compacter la composition, en particulier par compression directe, par exemple sur des presses rotatives ;
c) éventuellement, introduire sur la première couche la composition d'une deuxième couche puis pré-compacter comme pour la première couche ;
d) éventuellement renouveler l'étape c) autant de fois que de couches nécessaires ; et
e) compacter l'ensemble des couches, en particulier par compression directe, par exemple sur des presses rotatives, pour obtenir une composition compactée.

La composition compactée ainsi obtenue est résistante aux chocs.

Les forces de pré-compression utilisées sont en particulier comprises entre 5 et 200 kN, avantageusement entre 5 et 100 kN et plus avantageusement entre 10 et 80 kN. La force de compression utilisée est en particulier comprise entre 20 et 1000 kN, avantageusement entre 40 et 600 kN et plus avantageusement entre 150 et 400 kN.

La présente invention a également pour objet un dispositif absorbant d'humidité caractérisé en ce qu'il comprend une composition absorbante d'humidité telle que définie ci-dessus, ainsi que l'utilisation d'un tel dispositif pour la déshumidification d'une pièce.

Le dispositif selon l'invention permet notamment d'absorber l'humidité de l'air dans un habitable, notamment une pièce d'une habitation, tout en évitant le renversement ou la fuite de la saumure formée au cours du temps. Le dispositif ainsi obtenu est donc facile d'utilisation et pratique, la composition absorbante d'humidité pouvant être facilement évacuée dans le réseau classique des déchets ménagers solides sans qu'il soit nécessaire de transporter une solution liquide.

La présente invention a également pour objet l'utilisation d'au moins un agent séquestrant choisi parmi les polymères de polycarboxylate tels que les polyacrylates, les copolymères acrylique/maléique, les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges, dans une composition absorbante d'humidité comprenant au moins un agent desséchant choisi parmi le sel de CaCl₂, le sel de MgCl₂, et leurs mélanges, et éventuellement au moins un agent super-absorbant capable d'absorber la saumure formée par ledit agent desséchant après absorption de l'humidité, afin d'éviter toute fuite de la saumure résultant de l'absorption de l'humidité de l'air par la composition absorbante.

### EXEMPLES

### Exemple 1 : Préparation d'une composition absorbante d'humidité comprenant un mélange de CaCl₂ et d'agent séquestrant (composition hors invention).

Les compositions suivantes sont préparées en mélangeant les différents ingrédients:

**Tableau 1 : composition des mélanges préparés**

| | Référence | 1 | 2 |
|---|---|---|---|
| % CaCl2 dihydraté | 100 | 57,9 | 68,8 |
| % citrate de sodium | 0 | **42,1** | 0,0 |
| % EDTA | 0 | 0,0 | **31,2** |
| TOTAL | 100 | 100 | 100 |
| Masse tablette (g) | 11 | 19 | 16 |

Les agents séquestrant testés sont: le citrate de sodium et l'EDTA.

Les mélanges obtenus sont ensuite comprimés à l'aide d'un outillage cylindrique de diamètre 32mm sur une presse hydraulique à 62MPa. Les tablettes sont placées dans des petits récipients en plastique de 40mm de diamètre.

Les différentes tablettes et récipients sont ensuite placés dans une enceinte à atmosphère contrôlée dont la température est fixée à 32.7°C et l'humidité relative à 41.3% pendant une vingtaine de jours, ce qui correspond à environ 2-3 mois en conditions normales (à température ambiante). Au cours du temps, on note si on observe la présence de saumure liquide.

**Tableau 2 : résultats obtenus**

| | Référence | 1 | 2 |
|---|---|---|---|
| Présence de saumure liquide dans le récipient (O/N) | O | N | N |

| | | | |
|---|---|---|---|
| *O* = *présence de saumure liquide ; N*= *absence de saumure liquide* | | | |

D'après les résultats obtenus, on note que les compositions composées de CaCl₂ et d'un agent séquestrant permettent d'absorber la saumure qui se forme au cours du temps. L'agent séquestrant qui donne les meilleurs résultats au niveau de l'absorption de la saumure est l'EDTA.

### Exemple 2 : Préparation d'une composition absorbante d'humidité selon l'invention comprenant un mélange de CaCl₂, d'un agent séquestrant et d'un agent super-absorbant (le Vivastar CS 302 SV^{®})

Les compositions suivantes sont préparées par mélange :

**Tableau 3 : composition des mélanges préparés**

| | Référence | 3 | 4 | 5 | 6 |
|---|---|---|---|---|---|
| % CaCl₂ dihydraté | 100 | 64,7 | 71,0 | 78,6 | 66,7 |
| % citrate de sodium | 0 | 0,0 | **12,9** | 0,0 | 0,0 |
| % Tripolyphosphate de sodium | 0 | 0,0 | 0,0 | 0,0 | **9,1** |
| % EDTA | 0 | 0,0 | 0,0 | **7,1** | 0,0 |
| % Vivastar CS 302 SV^{®} | 0 | **35,3** | **16,1** | **14,3** | **24,2** |
| TOTAL | **100** | 100 | 100 | 100 | 100 |
| Masse tablette (g) | 11 | 17 | 15.5 | 14 | 16.5 |

Les agents séquestrant testés sont: le citrate de sodium, le tripolyphosphate de sodium et l'EDTA.

Le super-absorbant testé est: le Vivastar CS 302 SV^{®} (carboxyméthylamidon sodique)

Les mélanges obtenus sont ensuite comprimés à l'aide d'un outillage cylindrique de diamètre 32 mm sur une presse hydraulique à 62MPa. Les tablettes sont placées dans des petits récipients en plastique de 40 mm de diamètre.

Les différentes tablettes et récipients sont ensuite placés dans une enceinte à atmosphère contrôlée dont la température est fixée à 32.7°C et l'humidité relative à 41.3% pendant une vingtaine de jours, ce qui correspond à environ 2-3 mois en conditions normales (à température ambiante). Au cours du temps, on note si on observe la présence de saumure liquide.

**Tableau 4 : résultats obtenus**

| | Référence | 3 | 4 | 5 | 6 |
|---|---|---|---|---|---|
| Présence de saumure liquide dans le récipient (O/N) | O | N | N | N | N |

| | | | | | |
|---|---|---|---|---|---|
| *O* = *présence de saumure liquide ; N*= *absence de saumure liquide* | | | | | |

D'après les résultats obtenus, on note que l'utilisation de séquestrant permet de diminuer la quantité de super-absorbant (Vivastar CS 302 SV^{®}) nécessaire à l'absorption de la saumure liquide et d'augmenter la quantité de CaCl2 dans la composition. Le séquestrant qui donne les meilleures résultats avec la Vivastar CS 302 SV est l'EDTA.

### Exemple 3 : Préparation d'une composition absorbante d'humidité selon l'invention comprenant un mélange de CaCl₂, d'un agent séquestrant et d'un agent super-absorbant (l'Aquasorb 3005KM^{®})

Les compositions suivantes sont préparées en mélangeant les différents ingrédients:

**Tableau 5 : composition des mélanges préparés**

| | Référence | 7 | 8 |
|---|---|---|---|
| % CaCl₂ dihydraté | 100 | 20 | 61.1 |
| % citrate de sodium | 0 | 0 | 27.8 |
| % Aquasorb 3005KM^{®} | 0 | 80 | 11.1 |
| TOTAL | 100 | 100 | 100 |
| Masse tablette (g) | 11 | 25 | 18 |

L'agent séquestrant testé est : citrate de sodium.

Le super-absorbant testé est: l'Aquasorb 3005KM^{®} (copolymère réticulé d'acrylamide et d'acrylate de potassium)

Les mélanges obtenus sont ensuite comprimés à l'aide d'un outillage cylindrique de diamètre 32mm sur une presse hydraulique à 62MPa. Les tablettes sont placées dans des petits récipients en plastique de 40mm de diamètre.

Les différentes tablettes et récipients sont ensuite placés dans une enceinte à atmosphère contrôlée dont la température est fixée à 32.7°C et l'humidité relative à 41.3% pendant une vingtaine de jours, ce qui correspond à environ 2-3 mois en conditions normales (à température ambiante). Au cours du temps, on note si on observe la présence de saumure liquide.

**Tableau 6 : résultats obtenus**

| | Référence | 7 | 8 |
|---|---|---|---|
| Présence de saumure liquide dans le récipient (O/N) | O | N | N |

| | | | |
|---|---|---|---|
| *O* = *présence de saumure liquide ; N*= *absence de saumure liquide* | | | |

D'après les résultats obtenus, on note que l'utilisation de citrate de sodium permet de diminuer la quantité de super-absorbant (Aquasorb 3005KM) nécessaire à l'absorption de la saumure liquide et d'augmenter la quantité de CaCl2 dans la composition.

Dans l'ensemble de la description ci-dessus et sauf indication contraire, les pourcentages sont exprimés en poids.

## Revendications

1. Composition absorbante d'humidité comprenant :
- 50 à 90 % en poids d'au moins un agent desséchant choisi parmi le sel de CaCl₂, le sel de MgCl₂, et leurs mélanges, et
- 5 à 30 % en poids d'au moins un agent séquestrant choisi parmi les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges ; et
- 3 à 30 % en poids d'au moins un agent super-absorbant capable d'absorber la saumure formée par ledit agent desséchant après absorption de l'humidité.

2. Composition selon la revendication 1, dans laquelle l'agent desséchant est le sel de CaCl₂.

3. Composition selon la revendication 1 ou 2, dans laquelle l'agent séquestrant est choisi parmi le tripolyphosphate de sodium, le citrate de sodium, l'acide éthylène-diamine-tétraacétique (EDTA), l'acide méthylglycine-diacétique (MGDA), et leurs mélanges, de préférence parmi le citrate de sodium, l'acide éthylène-diamine-tétraacétique (EDTA) et l'acide méthylglycine-diacétique (MGDA) et leurs mélanges.

4. Composition selon l'une quelconques des revendications 1 à 3, dans laquelle l'agent super-absorbant est choisi parmi les celluloses, les dérivés de celluloses, les amidons, les dérivés d'amidon, la pectine, la gélatine, les gommes telles que la gomme guar, l'agar agar, les alginates, les polyacrylates de sodium, les copolymères polyacrylate/polyacrylamide, les copolymères polyacrylamides, les copolymère poly(éthylène-maléique anhydre), les copolymères alcool polyvinylique, l'oxyde de polyéthylène réticulé, le (méth)acrylamides, les N-alkyl(méth)acrylamides, les N,N-dialkyl(méth)acrylamides, les N-hydroxyalkyl(méth)acrylamides, les N-hydroxyéthyl(méth)acrylamides, les N,N-dihydroxyalkyl(méth)acrylamides et les lactames de vinyle.

5. Composition selon l'une quelconques des revendications 1 à 4, comprenant en outre au moins un additif supplémentaire tel que un colorant, un anti-allergique, une charge minérale de type silice, du carbonate de calcium, un lubrifiant ou leur mélange.

6. Composition selon l'une quelconques des revendications 1 à 5, comprenant en outre au moins une substance active volatile, notamment choisie parmi les substances parfumantes, désodorisantes, bactéricides, insecticides, répulsives d'animaux ou d'insectes, les huiles essentielles et leurs mélanges.

7. Composition selon l'une quelconques des revendications 1 à 6, **caractérisée en ce que** ladite composition est sous forme de tablette, de granulés ou de poudre, en particulier sous forme de tablette.

8. Dispositif absorbant d'humidité, **caractérisé en ce qu'**il comprend une composition absorbante d'humidité telle que définie dans l'une quelconque des revendications 1 à 7.

9. Utilisation d'un dispositif absorbant d'humidité tel que défini dans la revendication 8, pour la déshumidification d'une pièce d'une habitation ou d'un habitacle.

10. Utilisation d'au moins un agent séquestrant choisi parmi les phosphonates acryliques, les polycarboxylates monomères tels que les citrates, les gluconates, les oxydisuccinates, les mono-, di- et tri-succinates de glycérol, les carboxyméthyloxysuccinates, les composés amino polycarboxyliques tels que les carboxyméthyloxymalonates d'acide méthylglycinediacétate (MGDA), l'acide diacétique glutamique (GLDA), l'imminodisuccinate (IDS), éthylènediamine disuccinate (EDDS), les dipicolinates, les nitrilotriacétates, les hydroxyéthyliminodi acétates, l'acide éthylène-diamine-tétraacétique (EDTA), l'acide nitrilotriacétique (NTA), orthophosphates, les méta-phosphates, les pyrophosphates, le tripolyphosphate de sodium, et leurs mélanges, dans une composition absorbante d'humidité comprenant au moins un agent desséchant choisi parmi le sel de CaCl₂, le sel de MgCl₂, et leurs mélanges, afin d'éviter toute fuite de la saumure résultant de l'absorption de l'humidité de l'air par la composition absorbante.

11. Utilisation selon la revendication 10, dans laquelle ladite composition absorbante d'humidité comprend également au moins un agent super-absorbant capable d'absorber la saumure formée par ledit agent desséchant après absorption de l'humidité.

## Patentansprüche

1. Feuchtigkeitsabsorbierende Zusammensetzung, umfassend:
- 50 bis 90 Gew.-% mindestens eines Trocknungsmittels, das aus dem Salz von CaCl₂, dem Salz von MgCl₂ und deren Gemischen ausgewählt ist, und
- 5 bis 30 Gew.-% mindestens eines Sequestriermittels, das aus den Acrylphosphonaten, den monomeren Polycarboxylaten wie den Citraten, den Gluconaten, den Oxydisuccinaten, den Glycerinmono-, -di- und -tri-succinaten, den Carboxymethyloxysuccinaten, den Aminopolycarbonverbindungen wie den Carboxymethyloxymalonaten der Methylglycindiacetatsäure (MGDA), der Glutamindiessigsäure (GLDA), Iminodisuccinat (IDS), Ethylendiamindisuccinat (EDDS), den Dipicolinaten, den Nitrilotriacetaten, den Hydroxyethyliminodiacetaten, der Ethylendiamintetraessigsäure (EDTA), der Nitrilotriessigsäure (NTA), Orthophosphaten, den Metaphosphaten, den Pyrophosphaten, Natriumtripolyphosphat und deren Gemischen ausgewählt ist; und
- 3 bis 30 Gew.-% mindestens eines Superabsorptionsmittels, das imstande ist, die von dem Trocknungsmittel gebildete Salzlösung nach Absorption der Feuchtigkeit zu absorbieren.

2. Zusammensetzung nach Anspruch 1, wobei das Trocknungsmittel das Salz von CaCl₂ ist.

3. Zusammensetzung nach Anspruch 1 oder 2, wobei das Sequestriermittel aus Natriumtripolyphosphat, Natriumcitrat, Ethylendiamintetraessigsäure (EDTA), Methylglycindiacetatsäure (MGDA) und deren Gemischen, vorzugsweise aus Natriumcitrat, Ethylendiamintetraessigsäure (EDTA) und Methylglycindiacetatsäure (MGDA) und deren Gemischen ausgewählt ist.

4. Zusammensetzung nach einem der Ansprüche 1 bis 3, wobei das Superabsorptionsmittel aus den Cellulosen, den Cellulosederivaten, den Stärken, den Stärkederivaten, Pektin, Gelatine, den Gummi wie Guaran, Agar Agar, den Alginaten, den Natriumpolyacrylaten, den Polyacrylat/Polyacrylamid-Copolymeren, den Polyacrylamid-Copolymeren, den Polyethylenmaleinanhydrid-Copolymeren, den Polyvinylalkohol-Copolymeren, vernetztem Polyethylenoxid, den (Meth)acrylamiden, den N-Alkyl(meth)acrylamiden, den N,N-Dialkyl(meth)acrylamiden, den N-Hydroxyalkyl(meth)acrylamiden, den N-Hydroxyethyl(meth)acrylamiden, den N,N-Dihydroxyalkyl(meth)acrylamiden und den Vinyllactamen ausgewählt ist.

5. Zusammensetzung nach einem der Ansprüche 1 bis 4, umfassend ferner mindestens einen zusätzlichen Zusatzstoff wie ein Farbstoff, ein Anti-Allergen, ein mineralischer Zusatz vom Typ Siliciumoxid, Calciumcarbonat, ein Schmiermittel oder deren Gemisch.

6. Zusammensetzung nach einem der Ansprüche 1 bis 5, umfassend ferner mindestens eine volatile aktive Substanz, die insbesondere aus den parfümierenden, desodorisierenden, bakteriziden, insektiziden, Tiere oder Insekten abwehrenden Substanzen, den ätherischen Ölen und deren Gemischen ausgewählt ist.

7. Zusammensetzung nach einem der Ansprüche 1 bis 6, **dadurch gekennzeichnet, dass** die Zusammensetzung in Tabletten-, Granulat- oder Pulverform, vor allem in Tablettenform vorliegt.

8. Feuchtigkeitsabsorbierende Vorrichtung, **dadurch gekennzeichnet, dass** sie eine feuchtigkeitsabsorbierende Zusammensetzung nach einem der Ansprüche 1 bis 7 umfasst.

9. Verwendung einer feuchtigkeitsabsorbierenden Vorrichtung nach Anspruch 8 für die Entfeuchtug eines Zimmers einer Wohnung oder eines Innenraums.

10. Verwendung mindestens eines Sequestriermittels, das aus den Acrylphosphonaten, den monomeren Polycarboxylaten wie den Citraten, den Gluconaten, den Oxydisuccinaten, den Glycerinmono-, -di- und -tri-succinaten, den Carboxymethyloxysuccinaten, den Aminopolycarbonverbindungen wie den Carboxymethyloxymalonaten der Methylglycindiacetatsäure (MGDA), der Glutamindiessigsäure (GLDA), Iminodisuccinat (IDS), Ethylendiamindisuccinat (EDDS), den Dipicolinaten, den Nitrilotriacetaten, den Hydroxyethyliminodiacetaten, der Ethylendiamintetraessigsäure (EDTA), der Nitrilotriessigsäure (NTA), Orthophosphaten, den Metaphosphaten, den Pyrophosphaten, Natriumtripolyphosphat und deren Gemischen ausgewählt ist, in einer feuchtigkeitsabsorbierenden Zusammensetzung, die mindestens ein Trocknungsmittel umfasst, das aus dem Salz von CaCl₂, dem Salz von MgCl₂ und deren Gemischen ausgewählt ist, um jedwedes Auslaufen der Salzlösung zu verhindern, die aus der Absorption der Luftfeuchtigkeit durch die absorbierende Zusammensetzung resultiert.

11. Verwendung nach Anspruch 10, wobei die feuchtigkeitsabsorbierende Zusammensetzung ebenfalls mindestens ein Superabsorptionsmittel umfasst, das imstande ist, die von dem Trocknungsmittel nach Absorption der Feuchtigkeit gebildete Salzlösung zu absorbieren.

## Claims

1. A moisture absorbing composition comprising:
- 50 to 90% by weight of at least one desiccant selected from CaCl₂ salt, MgCl₂ salt, and mixtures thereof, and
- 5 to 30% by weight of at least one sequestering agent selected from acrylic phosphonates, monomer polycarboxylate such as citrates, gluconates, oxydisuccinates, glycerol mono-, di- and tri-succinates, carboxymethyloxysuccinates, amino polycarboxylic compounds such as methylglycinediacetate acid carboxymethyloxymalonates (MGDA), glutamic diacetic acid (GLDA), iminodisuccinate (IDS), ethylenediamine disuccinate (EDDS), dipicolinates, nitrilotriacetates, hydroxyethyliminodi acetates, ethylenediaminetetraacetic acid (EDTA), nitrilotriacetic acid (NTA), orthophosphates, metaphosphates, pyrophosphates, sodium tripolyphosphate, and mixtures thereof; and
- 3 to 30% by weight of at least one super-absorbent agent capable of absorbing the brine formed by said desiccant after absorption of moisture.

2. The composition according to claim 1, wherein the desiccant is the CaCl₂ salt.

3. The composition according to claim 1 or 2, wherein the sequestering agent is selected from sodium tripolyphosphate, sodium citrate, ethylenediaminetetraacetic acid (EDTA), methylglycine-diacetic acid (MGDA), and mixtures thereof, preferably from sodium citrate, ethylenediaminetetraacetic acid (EDTA) and methylglycine-diacetic acid (MGDA) and mixtures thereof.

4. The composition according to any one of claims 1 to 3, wherein the super-absorbent agent is selected from celluloses, cellulose derivatives, starches, starch derivatives, pectin, gelatin, gums such as guar gum, agar agar, alginates, sodium polyacrylates, polyacrylate/polyacrylamide copolymers, polyacrylamide copolymers, poly(ethylene-maleic anhydrous) copolymers, polyvinyl alcohol copolymers, cross-linked polyethylene oxide, (meth)acrylamides, N-alkyl(meth)acrylamides, N,N-dialkyl(meth)acrylamides, N-hydroxyalkyl(meth)acrylamides, N-hydroxyethyl(meth)acrylamides, N,N-dihydroxyalkyl(meth)acrylamides and vinyl lactams.

5. The composition according to any one of claims 1 to 4, further comprising at least one additional additive such as a colorant, an anti-allergic agent, a silica-type mineral filler, calcium carbonate, a lubricant or a mixture thereof.

6. The composition according to any one of claims 1 to 5, further comprising at least one volatile active substance, in particular selected from perfuming, deodorizing, bactericidal, insecticide, animal or insect repellent substances, essential oils and mixtures thereof.

7. The composition according to any one of claims 1 to 6, **characterized in that** said composition is in the form of a tablet, granules or powder, in particular in the form of a tablet.

8. A moisture-absorbing device, **characterized in that** it comprises a moisture-absorbing composition as defined in any one of claims 1 to 7.

9. Use of a moisture-absorbing device as defined in claim 8, for dehumidifying a room of a dwelling or a passenger compartment.

10. Use of at least one sequestering agent selected from acrylic phosphonates, polycarboxylate monomers such as citrates, gluconates, oxydisuccinates, glycerol mono-, di- and tri-succinates, carboxymethyloxysuccinates, amino polycarboxylic compounds such as methylglycinediacetate acid carboxymethyloxymalonates (MGDA), glutamic diacetic acid (GLDA), iminodisuccinate (IDS), ethylenediamine disuccinate (EDDS), dipicolinates, nitrilotriacetates, hydroxyethyliminodi acetates, ethylenediamine tetraacetic acid (EDTA), nitrilotriacetic acid (NTA), orthophosphates, metaphosphates, pyrophosphates, sodium tripolyphosphate, and mixtures thereof, in a moisture-absorbing composition comprising at least one desiccant selected from CaCl₂ salt, the MgCl₂ salt, and mixtures thereof, in order to prevent any leakage of the brine resulting from the absorption of moisture from the air by the absorbent composition.

11. The use according to claim 10, wherein said moisture absorbent composition also comprises at least one superabsorbent agent capable of absorbing brine formed by said desiccant after absorption of moisture.
